# EUROPÄISCHE PATENTSCHRIFT

(11) **EP 0 479 077 B1**
(45) Veröffentlichungstag und Bekanntmachung des Hinweises auf die Patenterteilung: **10.05.1995**
(21) Anmeldenummer: 91116089.3
(22) Anmeldetag: 21.09.1991
(51) Int. Cl.: B01D 29/41, B01D 29/01, B01D 33/21, B01D 25/26, B01D 39/39, B01D 29/68, B01D 33/50

(54) **Druckfilter mit kontinuierlicher Abreinigung der Filterfläche**
Pressure filter with continuous cleaning of the filter surfaces
Filtre sous pression avec régéneration en continu des surfaces filtrantes

(30) Priorität: 05.10.1990 DE 4031627
(43) Veröffentlichungstag der Anmeldung: 08.04.1992
(73) Patentinhaber: SCHWELM ANLAGEN + APPARATE GMBH, D-58332 Schwelm (DE)
(72) Erfinder: Bott, Reinhard, Dr.-Ing., W-7517 Waldbronn (DE); Boye, Jan, Dr.-Ing., W-5600 Wuppertal 1 (DE); Ehrfeld, Egon, Dipl.-Ing., W-7500 Karlsruhe (DE); Kossmann, Gerhard, Dipl.-Ing., W-4322 Sprockhövel (DE)
(74) Vertreter: Albrecht, Rainer Harald, Dr.-Ing.

(56) Entgegenhaltungen:
- EP-A- 0 382 202
- WO-A-90/08587
- FR-A- 2 192 856
- NL-A- 8 103 750
- US-A- 2 173 060

## Beschreibung

Die Erfindung betrifft ein Druckfilter mit einer Mehrzahl von Filterplatten mit ebener Filterfläche, Anschlüssen für Fluidzulauf und Filtratablauf, Rückspülleitung zum Austragen der an den Filterflächen abgeschiedenen Inhaltsstoffe und an die Rückspülleitung angeschlossene Absaugkammern, die an den Filterflächen dichtend anliegen und über die Filterflächen der Filterplatten bewegbar sind, wobei in der Rückspülleitung sowie in den daran anschließenden Absaugkammern ein Druck einstellbar ist, der stets kleiner ist als der filtratseitige Druck. - Das Druckfilter ist einsetzbar für die Abtrennung von Feststoffen, Fetten oder formveränderlichen Stoffen aus Suspensionen, Dispersionen, Emulsionen oder Gasen. In der Praxis wird das Druckfilter vorzugsweise zur Abscheidung von Feststoffen aus Flüssigkeiten eingesetzt. Die Filtration erfolgt unter einer Druckdifferenz Δp zwischen dem Fluidraum (p₁) und dem Filtratraum (p₂). Dabei werden an den Filterelementen Fluidinhaltsstoffe abgeschieden, die auf der Filterfläche eine Ablagerungsschicht bilden und den Filtratfluß reduzieren. Bei dem eingangs beschriebenen Druckfilter erfolgt eine kontinuierliche Abreinigung der Filterfläche, indem ein kleiner Teil der installierten Filterfläche in umgekehrter Strömungsrichtung durchströmt wird. Dieser Vorgang wird als Rückspülen bezeichnet. Durch das Rückspülen wird die an der Filterfläche anhaftende Ablagerungsschicht durch rückströmendes Filtrat gelöst und in der Rückspülleitung ausgetragen. Die Rückspülung erfolgt dadurch, daß ein Teil der Filterfläche fluidraumseitig mit einem Druck beaufschlagt wird, der kleiner ist als der Druck im Filtratraum. Ohne daß der Filtrationsvorgang an der restlichen Filterfläche beeinflußt wird, erfolgt an der Teilfläche, die von dem Rückspülkopf gegenüber dem Fluidraum abgedichtet ist, ein Rückspülvorgang.

Ein Druckfilter der eingangs beschriebenen Art ist aus EP-A-0 382 202 bekannt. Das bekannte Druckfilter weist ein druckfestes Gehäuse auf, in dem eine Mehrzahl von Filterplatten angeordnet ist. Die Filterplatten erstrecken sich über den gesamten Querschnitt des Gehäuses und sind dichtend an dieses angeschlossen. An der Plattenoberseite und der Plattenunterseite der Filterplatten herrschen unterschiedliche Drücke. Die beim Filtrieren auftretenden Druckdifferenzen führen zu beachtlichen Biegebeanspruchungen in den Filterplatten, die durch aufwendige Trägerkonstruktionen an der Unterseite der Filterplatten aufgefangen werden müssen. Bei großen Abmessungen der Filterplatten sind Biegeverformungen, welche die Wirksamkeit der Abreinigung beeinträchtigen, nicht zu vermeiden. Die pro Volumen installierbare Filterfläche ist ebenfalls verbesserungsbedürftig.

Die beschriebenen Nachteile treffen auch auf aus der Praxis bekannte Druckfilter zu, die auf einem Drehteller angeordnete, innenseitig mit dem zu filtrierenden Fluid beaufschlagte Filterkerzen als Filterelemente aufweisen. Der Drehteller ist mit einem intermittierenden Antrieb verbunden, wobei durch Rotationsbewegungen des Drehtellers jeweils eine Filterkerze an die ortsfeste Rückspülung anschließbar ist, ohne daß der Filtrationsvorgang an den anderen Filterkerzen unterbrochen wird. Bei einer Vollumdrehung des Drehtellers erfolgt auf diese Weise nacheinander eine Abreinigung sämtlicher Filterkerzen.

Nachteilig ist auch bei dieser Konstruktion, daß der Drehteller die bei der Filtration auftretende Druckdifferenz zwischem dem Fluidraum und dem Filtratraum aufnehmen muß. Mit zunehmender Fläche des Drehtellers wachsen die Druck- und Biegebeanspruchungen beachtlich. Aufwendige konstruktive Maßnahmen zur Lagerung und Abdichtung des Drehtellers sind erforderlich. Aus diesem Grunde ist die bekannte Anordnung nur für kleinvolumige Filter mit relativ kleiner Filterfläche praktikabel. Aus den genannten Gründen unterliegt auch der Filtrationsdruck beachtlichen Beschränkungen.

Der Erfindung liegt die Aufgabe zugrunde, ein Druckfilter der Eingangs beschriebenen Art mit kontinuierlicher Abreinigung der Filterfläche anzugeben, welches große Filterflächen bezogen auf das Druckfiltervolumen aufweist und ferner ein Arbeiten bei hohen Drücken im Fluidzulauf erlaubt.

Zur Lösung dieser Aufgabe lehrt die Erfindung, daß die Filterplatten einen innenseitigen Strömungskanal für das ablaufende Filtrat, randseitig umlaufende Dichtungsflächen und mindestens einen orthogonal zur Filterfläche angeordneten Fluidkanal aufweisen und alternierend mit Filterrahmen zu einer Filterpresse vereinigt sind, wobei das zu filtrierende Fluid durch den mit dem Fluidzulauf verbundenen Fluidkanal der Filterplatten dem von den Filterrahmen gebildeten Fluidraum zuführbar ist und daß die Absaugkammern jeweils mit einer translatorisch bewegbaren, durch eine Bohrung des Filterrahmens dichtend geführten Hohlwelle verbunden sind.

Die Filterplatten haben vorzugsweise rechteckige Gestalt. Als Absaugkammern sind Absaugleisten mit an die Filterflächen angepaßter Länge einsetzbar. Es empfiehlt sich ferner, die aus dem Druckfilter herausgeführten Hohlwellen mittels lösbarer Kupplungen an einen gemeinsamen Antrieb anzuschließen. Treten Betriebsstörungen an dem Druckfilter auf, so können ggf. einzelne Absaugkammern außer Betrieb gesetzt und das Druckfilter mit verminderter Leistung weiter betrieben werden. Es empfiehlt sich ferner, die Absaugkammern mit elastischen Elementen zur Anpassung an den Fluidkanalabstand auszurüsten. Eine weitere Verbesserung in funktionsmäßiger Hinsicht kann schließlich dadurch erreicht werden, daß an den Absaugkammern Reinigungsdüsen für die Zufuhr von Fremd- oder Eigenmedium oder Einrichtungen zur Ultrabeschallung angeordnet sind.

Die Vorteile der Erfindung sind darin zu sehen, daß das Druckfilter mit großen Filterflächen ausgerüstet werden kann und gleichwohl eine kontinuierliche Abreinigung der Filterfläche durch Rückspülung möglich ist. Dadurch ist ein ununterbrochener Betrieb des Druckfilters mit kontinuierlichem Zulauf des zu filtrierenden und kontinuierlichem Filtratablauf gewährleistet. Die installierbare Filterfläche unterliegt praktisch keinen Beschränkungen. Sie ist an den Anwendungsfall anpaßbar. Ein weiterer Vorteil ist darin zu sehen, daß das erfindungsgemäße Druckfilter eine Filtration mit hohen Druckdifferenzen zuläßt.

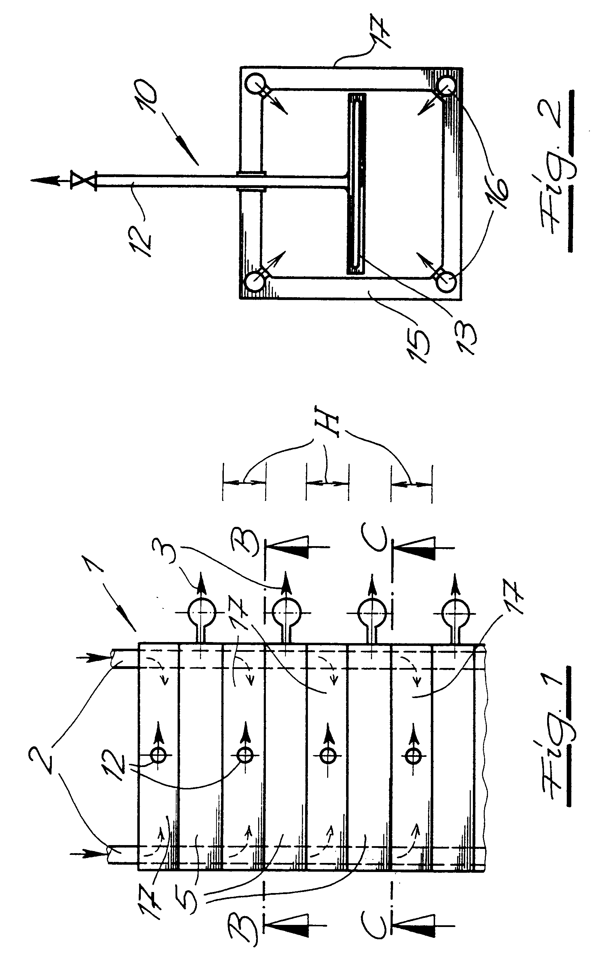

Im folgenden wird die Erfindung anhand einer lediglich ein Ausführungsbeispiel darstellenden Zeichnung ausführlich erläutert. Es zeigen in schematischer Darstellung
Fig. 1 eine Seitenansicht des Druckfilters,
Fig. 2 den Schnitt B-B in Fig. 1,
Fig. 3 den Schnitt C-C in Fig. 1.

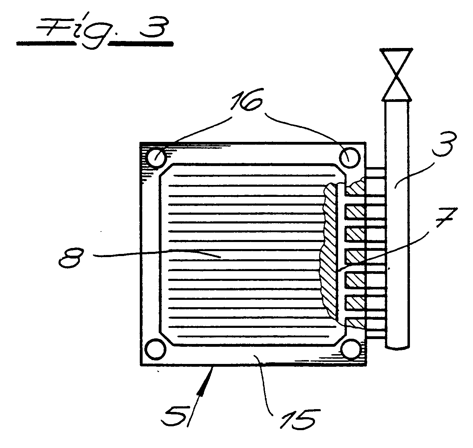

Das in den Figuren dargestellte Druckfilter ist nach Art einer Filterpresse aufgebaut. Zum grundsätzlichen Aufbau gehören eine Mehrzahl von Filterplatten 5 mit ebener Filterfläche 8, Anschlüssen für Fluidzulauf 2 und Filtratablauf sowie Absaugkammern 13, die an eine nicht dargestellte Rückspülleitung zum Austragen von an den Filterflächen abgeschiedenen Fluidinhaltsstoffen angeschlossen sind. Die Filterplatten 5 weisen randseitig umlaufende Dichtungsflächen 15 sowie im Ausführungsbeispiel vier orthogonal zur Filterfläche angeordnete Fluidkanäle 16 auf und sind alternierend mit Filterrahmen 17, die den Fluidkanalabstand H zwischen benachbarten Filterplatten 5 bilden, zu der Filterpresse vereinigt. Die Absaugkammern 13 sind zwischen den Filterplatten angeordnet und jeweils von einer mit der Rückspülleitung verbundenen Hohlwelle 12 translatorisch bewegbar. Die Hohlwellen 12, sind jeweils durch eine umfangsseitig gedichtete Bohrung der Filterrahmen 17 hindurchgeführt. Die Filterplatten 5 haben vorzugsweise rechteckige Gestalt. Die Absaugkammern 13 sind in Form oben und unten offener Absaugleisten ausgebildet, deren Länge an die Filterplattengeometrie angepaßt ist. Die Hohlwellen 12, aus denen die von der Filterfläche abgelösten Fluidinhaltsstoffe ausgetragen werden, sind an einen hier nicht dargestellten gemeinsamen Antrieb angeschlossen, wobei zweckmäßigerweise lösbare Kupplungen vorgesehen sind. Der Fig. 3 entnimmt man, daß der innenseitige Strömungskanal 7 der Filterplatten 5 so ausgebildet ist, daß die aufliegenden Filterflächen 8 auf breiter Fläche ausreichend abgestützt sind. Es empfiehlt sich ferner, die Absaugkammern 13 mit elastischen Elementen zur Anpassung an den Fluidkanalabstand H auszurüsten. Im Rahmen der Erfindung liegt es schließlich, an den Absaugkammern 13 Reinigungsdüsen für die Zufuhr von Fluid- oder Eigenmedium oder Einrichtungen zur Ultrabeschallung anzuordnen.

## Patentansprüche

1. Druckfilter mit
einer Mehrzahl von Filterplatten (5) mit ebener Filterfläche (8),
Anschlüssen für Fluidzulauf (2) und Filtratablauf (3),
Rückspülleitung zum Austragen der an den Filterflächen abgeschiedenen Fluidinhaltsstoffe,
an die Rückspülleitung angeschlossenen Absaugkammern (13), die an den Filterflächen (8) dichtend anliegen und über die Filterflächen (8) der Filterplatten (5) bewegbar sind,
wobei in der Rückspülleitung sowie in den daran anschließenden Absaugkammern (13) ein Druck einstellbar ist, der stets kleiner ist als der filtratseitige Druck, **dadurch gekennzeichnet**, daß die Filterplatten (5) einen innenseitigen Strömungskanal (7) für das ablaufende Filtrat, randseitig umlaufende Dichtungsflächen (15) und mindestens einen orthogonal zur Filterfläche (8) angeordneten Fluidkanal (16) aufweisen und alternierend mit Filterrahmen (17) zu einer Filterpresse vereinigt sind, wobei das zu filtrierende Fluid durch den mit dem Fluidzulauf (2) verbundenen Fluidkanal (16) der Filterplatten (5) dem von den Filterrahmen (17) gebildeten Fluidraum (6) zuführbar ist und daß die Absaugkammern (13) jeweils mit einer translatorisch bewegbaren, durch eine Bohrung des Filterrahmens (17) dichtend geführten Hohlwelle (12) verbunden sind.

2. Druckfilter nach Anspruch 1, dadurch gekennzeichnet, daß die Filterplatten (5) beidseitig eine Filterfläche (8) aufweisen und daß die Absaugkammern (13) als oben und unten offene Absaugleisten ausgebildet sind.

3. Druckfilter nach Anspruch 1 oder 2, dadurch gekennzeichnet, daß die Absaugkammern (13) elastische Elemente zur Anpassung an den von jeweils einem Filterrahmen (17) gebildeten Fluidkanalabstand (H) zwischen den Filterflächen (8) benachbarter Filterplatten (5) aufweisen.

4. Druckfilter nach einem der Ansprüche 1 bis 3, dadurch gekennzeichnet, daß an den Absaugkammern (13) Reinigungsdüsen für die Zufuhr von Fremd- oder Eigenmedium oder Einrichtungen zur Ultrabeschallung vorgesehen sind.

5. Druckfilter nach einem der Ansprüche 1 bis 4, dadurch gekennzeichnet, daß die aus den Filterrahmen (17) herausgeführten Hohlwellen unter Zwischenschaltung lösbarer Kupplungen an einen gemeinsamen Antrieb angeschlossen sind.

## Claims

1. A pressure filter, having
a plurality of filter plates (5) with a flat filtering surface (8),
connections for fluid supply (2) and filtrate discharge (3),
a back-flushing line for removing the substances contained in the filtrate which are deposited on the filtering surfaces
suction chambers (13) connected to the back-flushing line, which are seated sealed against the filtering surfaces (8) and which can be moved over the filtering surfaces (8) of the filter plates (5),
wherein a pressure can be set in the back-flushing line and in the suction chambers (13) connected thereto which is always lower than the pressure on the filtrate side, characterised in that the filter plates (5) have an internal flow channel (7) for the discharging filtrate, have surrounding seal faces (15) at their edges, have at least one fluid channel (16) disposed orthogonally to the filtering surface (8), and are combined alternately with filter frames (17) to form a filter press, wherein the fluid to be filtered can be fed through the fluid channel (16) of the filter plates (5), which is connected to the fluid supply (2), to the fluid space (6) formed by the filter frames (17), and that the suction chambers (13) are connected in each case to a translationally movable hollow shaft (12) which is passed sealed through a bore of the filter frame (17).

2. A pressure filter according to claim 1, characterised in that the filter plates (5) have a filtering surface (8) on both sides, and that the suction chambers (13) are constructed as suction strips open at the top and at the bottom.

3. A pressure filter according to claim 1 or 2, characterised in that the suction chambers (13) have resilient elements for adapting to the fluid channel spacing (H) between the filtering surfaces (8) of adjacent filter plates (5), which spacing is formed by a filter frame (17) in each case.

4. A pressure filter according to any one of claims 1 to 3, characterised in that cleaning nozzles for the supply of an external medium or of the internal medium, or devices for ultrasonic irradiation, are provided on the suction chambers (13).

5. A pressure filter according to any one of claims 1 to 4, characterised in that the hollow shafts which are led out of the filter frames (17) are connected to a common drive with detachable couplings interposed therebetween.

## Revendications

1. Filtre sous presison, comprenant une pluralité de plaques-filtres (5) avec une surface filtrante (8) plane, des raccords pour l'arrivée de fluide (2) et pour l'écoulement du filtrat (3), une conduite de lavage à contre-courant pour l'évacuation des substances contenues dans le fluide et retenues sur les surfaces filtrantes, des chambres d'aspiration (13) raccordées à la conduite de lavage à contre-courant, qui sont appliquées de manière étanche contre les surfaces filtrantes (8) et peuvent être déplacées sur les surfaces filtrantes (8) des plaques-filtres (5), une pression pouvant être établie dans la conduite de lavage à contre-courant ainsi que dans les chambres d'aspiration (13) raccordées à celle-ci, pression qui est toujours inférieure à la pression du côté filtrat, caractérisé en ce que les plaques-filtres (5) comportent à l'intérieur un canal d'écoulement (7) pour le filtrat sortant sur les bords périphériques, des surfaces d'étanchéité (15), et au moins un canal de fluide (16) disposé orthogonalement à la surface filtrante (8), et sont réunies alternativement avec des cadres de filtre (17) en un filtre-presse, le fluide à filtrer pouvant être amené par le canal de fluide (16) des plaques-filtres (5) raccordé à l'arrivée de fluide (2), au compartiment de fluide (6) formé par les cadres de filtre (17), et que les chambres d'aspiration (13) sont reliées chacune avec un arbre creux (12) mobile en translation et guidé de manière étanche au travers d'un alèsage du cadre de filtre (17).

2. Filtre sous pression selon la revendication 1, caractérisé en ce que les plaques-filtres (5) présentent sur les deux côtés une surface filtrante (8), et que les chambres d'aspiration (13) sont conformées en baguettes d'aspiration ouvertes en haut et en bas.

3. Filtre sous pression selon la revendication 1 ou 2, caractérisé en ce que les chambres d'aspiration (13) comprennent des éléments élastiques pour l'adaptation à l'écartement (H) des canaux de fluide formés à chaque fois par un cadre de filtre (17) entre les surfaces filtrantes (8) de plaques-filtres (5) voisines.

4. Filtre sous pression selon l'une des revendications 1 à 3, caractérisé en ce que sur les chambres d'aspiration (13) sont prévues des buses de nettoyage pour l'amenée de fluide externe ou interne ou des dispositifs pour le traitement par ultrasons.

5. Filtre sous pression selon l'une des revendication 1 à 4, caractérisé en ce que les arbres creux sortant des cadres de filtre (17) sont couplés, avec interposition d'accouplements libérables, avec un système d'entraînement commun.
